# EUROPEAN PATENT APPLICATION

(11) **EP 4 604 611 A1**
(43) Date of publication of application: **20.08.2025**
(21) Application number: 23876561.4
(22) Date of filing: 28.09.2023
(51) Int. Cl.: H04W 28/06

(54) **METHOD AND APPARATUS USED IN COMMUNICATION NODE FOR WIRELESS COMMUNICATION**

(30) Priority: 12.10.2022 CN 202211245837
(71) Applicant: Apogee Networks, LLC, Dallas, TX 75201 (US)
(72) Inventor: YU, Qiaoling, Shanghai 201206 (CN); SONG, Shulin, Shanghai 201206 (CN); ZHANG, Xiaobo, Shanghai 201206 (CN)
(74) Representative: Gunzelmann, Rainer
(86) International application number: PCT/CN2023/122543
(87) International publication number: WO 2024/078358

(57) **Abstract**

Disclosed in the present application are a method and apparatus used in a communication node for wireless communication. A first node performs an operation on a first PDU, the first PDU including a first protocol header set and a first unit, wherein the operation is a reception or the operation is a transmission; the first protocol header set comprises at least a first protocol header and a second protocol header; any protocol header in the first protocol header set belongs to a first protocol layer, the first protocol layer being not higher than the SDAP sub-layer, and the first protocol layer being not lower than the MAC sub-layer; each protocol header in the first protocol header set indicates a first unit. With the present application, the transmission time delay is lowered, the switching is reduced, and the coverage performance is guaranteed.

## Description

### Technical Field

This application relates to a transmission method and apparatus in a wireless communication system, and in particular, to a transmission method and apparatus with a long delay.

### Related Art

With a growing demand for communication, a 3^{rd} generation partnership project (3GPP) develops key technical research such as a non-terrestrial network (NTN) technology, a sidelink communication technology, and a relay transmission technology, to enhance mobile robustness and transmission reliability, and reduce a transmission delay.

### SUMMARY

In conventional technologies, each time an L2 data packet is delivered to a lower layer at a transmit end, a protocol header is added. When a data packet of a corresponding protocol layer is received at a receive end, the protocol header is removed and delivered to a higher layer. Because one protocol header is added to an SDU, which indicates less information, how to improve the protocol header needs to be researched for a requirement of higher reliability or a lower delay.

For the foregoing problem, this application provides a solution for data transmission. An NR system is used as an example in the descriptions of the foregoing problem. This application is also applicable to, for example, a scenario of an LTE system. Further, although this application provides a specific implementation for a user plane, this application can also be applied to, for example, a control plane scenario, to obtain a technical effect similar to that of the user plane. Further, although this application is intended for a Uu air interface, this application can also be applied to a PC5 interface. Further, although this application is intended for a scenario of a terminal and a base station, this application is also applicable to a vehicle-to-everything (V2X) scenario, a communication scenario between a terminal and a relay, and a communication scenario between a relay and a base station, to obtain a technical effect similar to that in the scenario of a terminal and a base station. Further, although this application is intended for the scenario of a terminal and a base station, this application is also applicable to a communication scenario of integrated access and backhaul (IAB), to obtain a similar technical effect in the scenario of a terminal and a base station. Further, although this application is intended for a terrestrial network (TN) scenario, this application is also applicable to a communication scenario of a non-terrestrial network (NTN), to obtain a similar technical effect in the TN scenario. In addition, using a unified solution in different scenarios further helps reduce hardware complexity and costs.

In an embodiment, for explanations of terminologies in this application, refer to definitions of a standard protocol TS 36 series in 3GPP.

In an embodiment, for explanations of terminologies in this application, refer to definitions of a standard protocol TS 38 series in 3GPP.

In an embodiment, for explanations of terminologies in this application, refer to definitions of a standard protocol TS 37 series in 3GPP.

In an embodiment, for explanations of terminologies in this application, refer to definitions of standard protocols in institute of electrical and electronics engineers (IEEE).

It should be noted that, an embodiment and features in the embodiment in any node of this application may be applied to any other node in a case that no conflict occurs. Embodiments of this application and features in embodiments may be combined with each other arbitrarily in a case that no conflict occurs.

This application discloses a method for a first node used for wireless communication. The method includes:
performing an operation on a first PDU, where the first PDU includes a first protocol header set and a first unit, where
the operation is a receiving operation, or the operation is a sending operation; the first protocol header set includes at least a first protocol header and a second protocol header; any protocol header in the first protocol header set is a protocol header of a first protocol layer, the first protocol layer is not higher than an SDAP sublayer, and the first protocol layer is not lower than a MAC sublayer; and each protocol header in the first protocol header set indicates the first unit.

In an embodiment, to-be-resolved problems in this application include: How to shorten a transmission delay of a network with a long delay.

In an embodiment, to-be-resolved problems in this application include: How to perform an operation on the first unit.

In an embodiment, to-be-resolved problems in this application include: How to indicate the first unit.

In an embodiment, a benefit of the method includes: Effective information is increased by including a plurality of protocol headers in the first PDU to indicate the first unit.

According to an aspect of this application, the first protocol header and the second protocol header are two different protocol headers.

In an embodiment, a benefit of the method includes: Effective information is increased by including a plurality of protocol headers in the first PDU to indicate the first unit.

According to an aspect of this application,
before the operation is performed on the first PDU, a first processor receives a second PDU, where the second PDU includes the second protocol header and the first unit, where
the first PDU includes the second PDU and the first protocol header, the first PDU terminates between the first node and a second node, the second PDU terminates between the first node and a third node, and the operation is the sending operation.

In an embodiment, a benefit of the method includes: The transmission delay is shortened in the network with a long delay.

In an embodiment, a benefit of the method includes: When a PDU generated at the third node is forwarded to the second node by using the first node, protocol headers of a same protocol layer are increased, to improve transmission reliability.

According to an aspect of this application, the first protocol header and the second protocol header are two fields in a same protocol header.

According to an aspect of this application, the first protocol header indicates the first node, and the second protocol header indicates the third node.

In an embodiment, a benefit of the method includes: The plurality of protocol headers are included in the first PDU to indicate a plurality of nodes, so that the plurality of nodes receive the first unit, thereby reducing signaling overheads.

According to an aspect of this application, each of the first protocol header and the second protocol header includes a target field, the target field in the first protocol header and the target field in the second protocol header are set to a same value, and the operation is the receiving operation.

According to an aspect of this application, the first PDU includes a first field, and the first field indicates a quantity of protocol headers in the first protocol header set.

In an embodiment, a benefit of the method includes: The quantity of first protocol headers is variable, to reduce signaling overheads.

This application discloses a method for a second node used for wireless communication. The method includes:
performing an operation on a first PDU, where the first PDU includes a first protocol header set and a first unit;
the operation is a sending operation, or the operation is a receiving operation; the first protocol header set includes at least a first protocol header and a second protocol header; any protocol header in the first protocol header set is a protocol header of a first protocol layer, the first protocol layer is not higher than an SDAP sublayer, and the first protocol layer is not lower than a MAC sublayer; and each protocol header in the first protocol header set indicates the first unit.

According to an aspect of this application, the first protocol header and the second protocol header are two different protocol headers.

According to an aspect of this application, before the first PDU is sent by a first node, a second PDU is received by the first node, where the second PDU includes the second protocol header and the first unit, the first PDU includes the second PDU and the first protocol header, the first PDU terminates between the first node and a second node, the second PDU terminates between the first node and a third node, and the operation is the receiving operation.

According to an aspect of this application, the first protocol header and the second protocol header are two fields in a same protocol header.

According to an aspect of this application, the first protocol header indicates the first node, and the second protocol header indicates the third node.

According to an aspect of this application, each of the first protocol header and the second protocol header includes a target field, the target field in the first protocol header and the target field in the second protocol header are set to a same value, and the operation is the receiving operation.

According to an aspect of this application, the first PDU includes a first field, and the first field indicates a quantity of protocol headers in the first protocol header set.

This application discloses a method for a third node used for wireless communication. The method includes:
sending a second PDU, where the second PDU includes a second protocol header and a first unit;
after the second PDU is sent, a first PDU is sent by a first node, and the first PDU includes a first protocol header set and the first unit; the first protocol header set includes at least a first protocol header and the second protocol header, and the first protocol header and the second protocol header are two different protocol headers; any protocol header in the first protocol header set is a protocol header of a first protocol layer, the first protocol layer is not higher than an SDAP sublayer, and the first protocol layer is not lower than a MAC sublayer; each protocol header in the first protocol header set indicates the first unit; the first PDU includes the second PDU and the first protocol header; the first PDU terminates between the first node and a second node, and the second PDU terminates between the first node and a third node; and the first PDU is received by the second node.

According to an aspect of this application, the first protocol header indicates the first node, and the second protocol header indicates the third node.

According to an aspect of this application, each of the first protocol header and the second protocol header includes a target field, and the target field in the first protocol header and the target field in the second protocol header are set to a same value.

According to an aspect of this application, the first PDU includes a first field, and the first field indicates a quantity of protocol headers in the first protocol header set.

This application discloses a first node used for wireless communication, including:
a first processor, performing an operation on a first PDU, where the first PDU includes a first protocol header set and a first unit;
the operation is a receiving operation, or the operation is a sending operation; the first protocol header set includes at least a first protocol header and a second protocol header; any protocol header in the first protocol header set belongs to a first protocol layer, the first protocol layer is not higher than an SDAP sublayer, and the first protocol layer is not lower than a MAC sublayer; and each protocol header in the first protocol header set indicates the first unit.

This application discloses a second node used for wireless communication, including:
a second processor, performing an operation on a first PDU, where the first PDU includes a first protocol header set and a first unit;
the operation is a sending operation, or the operation is a receiving operation; the first protocol header set includes at least a first protocol header and a second protocol header; any protocol header in the first protocol header set is a protocol header of a first protocol layer, the first protocol layer is not higher than an SDAP sublayer, and the first protocol layer is not lower than a MAC sublayer; and each protocol header in the first protocol header set indicates the first unit.

This application discloses a third node used for wireless communication, including:
a third processor, sending a second PDU, where the second PDU includes a second protocol header and a first unit, where
after the second PDU is sent, a first PDU is sent by a first node, and the first PDU includes a first protocol header set and the first unit; the first protocol header set includes at least a first protocol header and the second protocol header, and the first protocol header and the second protocol header are two different protocol headers; any protocol header in the first protocol header set is a protocol header of a first protocol layer, the first protocol layer is not higher than an SDAP sublayer, and the first protocol layer is not lower than a MAC sublayer; and each protocol header in the first protocol header set indicates the first unit; the first PDU includes the second PDU and the first protocol header; the first PDU terminates between the first node and a second node, and the second PDU terminates between the first node and a third node; and the first PDU is received by the second node.

In an embodiment, compared with the conventional solution, this application has the following advantages:
- . reducing a transmission delay;
- . improving transmission reliability;
- . reducing signaling overheads; and
- . improving UE communication quality.

### BRIEF DESCRIPTION OF THE DRAWINGS

Other features, objectives, and advantages of this application become more apparent by reading detailed descriptions of non-restrictive embodiments with reference to the following accompanying drawings.
FIG. 1 is a transmission flowchart of a first PDU according to an embodiment of this application;
FIG. 2 is a schematic diagram of a network architecture according to an embodiment of this application;
FIG. 3 is a schematic diagram of radio protocol architectures of a user plane and a control plane according to an embodiment of this application;
FIG. 4 is a schematic diagram of a first communication device and a second communication device according to an embodiment of this application;
FIG. 5 is a flowchart of wireless transmission according to an embodiment of this application;
FIG. 6 is a flowchart of wireless transmission according to another embodiment of this application;
FIG. 7 is a schematic diagram in which a first protocol header indicates a first node, and a second protocol header indicates a third node according to this application;
FIG. 8 is a schematic diagram in which each of a first protocol header and a second protocol header includes a target field according to an embodiment of this application;
FIG. 9 is a schematic diagram in which a first PDU includes a first field according to an embodiment of this application;
FIG. 10 is a schematic diagram of a first PDU according to an embodiment of this application;
FIG. 11 is a schematic diagram of a first PDU and a second PDU according to an embodiment of this application;
FIG. 12 is a schematic diagram of a protocol header according to an embodiment of this application;
FIG. 13 is a block diagram of a structure of a processing apparatus for a first node according to an embodiment of this application;
FIG. 14 is a block diagram of a structure of a processing apparatus for a second node according to an embodiment of this application; and
FIG. 15 is a block diagram of a structure of a processing apparatus for a third node according to an embodiment of this application.

### DETAILED DESCRIPTION

The technical solutions of this application are further described in detail below with reference to the accompanying drawings. It should be noted that, embodiments of this application and features in embodiments may be combined with each other arbitrarily in a case that no conflict occurs.

### Embodiment 1

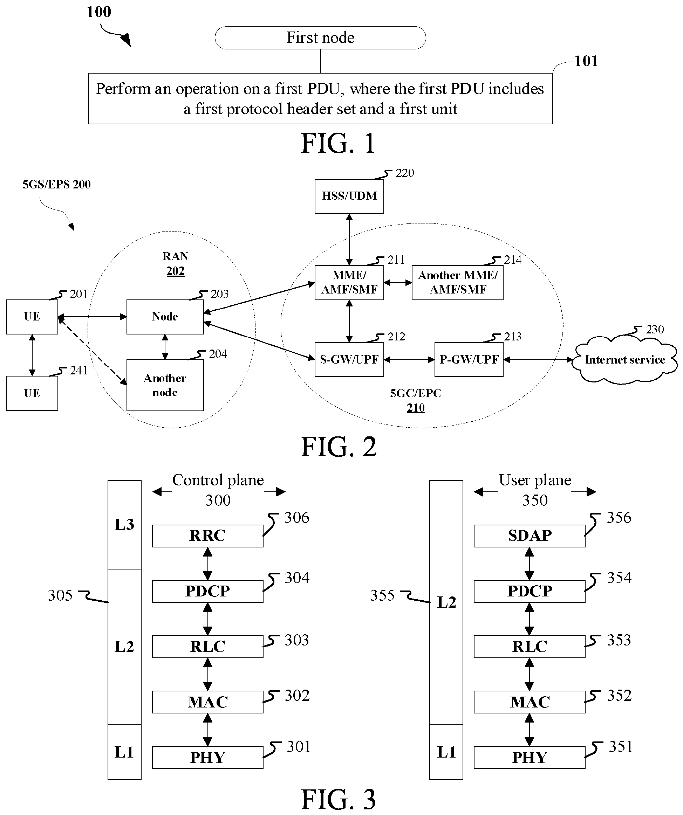

Embodiment 1 describes a transmission flowchart of a first PDU according to this application, as shown in FIG. 1. In FIG. 1, each box represents a step. It should be particularly noted that a sequence of boxes in the figure does not represent a time sequence between represented steps.

In Embodiment 1, in step 101, a first node in this application performs an operation on a first PDU, where the first PDU includes a first protocol header set and a first unit, where the operation is a receiving operation, or the operation is a sending operation; the first protocol header set includes at least a first protocol header and a second protocol header; any protocol header in the first protocol header set belongs to a first protocol layer, the first protocol layer is not higher than an SDAP sublayer, and the first protocol layer is not lower than a MAC sublayer; and each protocol header in the first protocol header set indicates the first unit.

In an embodiment, the PDU stands for protocol data unit.

In an embodiment, the MAC stands for medium access control.

In an embodiment, the SDAP stands for service data adaptation protocol.

In an embodiment, the first PDU is a PDCP data PDU.

In a sub-embodiment of this embodiment, the first PDU is used for user plane data transmission.

In a sub-embodiment of this embodiment, the first PDU is used for control plane data transmission.

In a sub-embodiment of this embodiment, the first PDU is used for MAC-I transmission.

In a sub-embodiment of this embodiment, the first PDU includes a PDCP header.

In a sub-embodiment of this embodiment, the PDCP header of the first PDU includes a PDCP sequence number (SN) field, and the PDCP SN field includes 12 bits, or the PDCP SN field includes 18 bits.

In a sub-embodiment of this embodiment, the PDCP header of the first PDU includes a *K_{NRP-sess}* ID field.

In a sub-embodiment of this embodiment, the PDCP header of the first PDU includes an SDU type field.

In a sub-embodiment of this embodiment, the PDCP header of the first PDU includes a data/control (D/C) field.

In a sub-embodiment of this embodiment, the PDCP header of the first PDU includes at least one reserved bit.

In an embodiment, the PDCP stands for packet data convergence protocol.

In an embodiment, the SDU stands for service data unit.

In an embodiment, the first PDU is a PDCP control PDU.

In a sub-embodiment of this embodiment, the first PDU is used for PDCP status report transmission.

In a sub-embodiment of this embodiment, the first PDU is used for decompression feedback report (interspersed ROHC feedback) transmission.

In a sub-embodiment of this embodiment, the first PDU is used for Ethernet header compression (EHC) feedback transmission.

In a sub-embodiment of this embodiment, the first PDU includes a PDCP header.

In a sub-embodiment of this embodiment, the PDCP header of the first PDU includes a PDU type field.

In a sub-embodiment of this embodiment, the PDCP header of the first PDU includes a D/C field.

In a sub-embodiment of this embodiment, the PDCP header of the first PDU includes a first missing count (FMC) field.

In a sub-embodiment of this embodiment, the PDCP header of the first PDU includes an interspersed ROHC feedback field.

In a sub-embodiment of this embodiment, the PDCP header of the first PDU includes an EHC feedback field.

In a sub-embodiment of this embodiment, the PDCP header of the first PDU includes an FE field.

In a sub-embodiment of this embodiment, the PDCP header of the first PDU includes at least one reserved bit.

In an embodiment, the first PDU is an RLC TMD PDU.

In a sub-embodiment of this embodiment, the first PDU does not include an RLC header.

In a sub-embodiment of this embodiment, the first PDU includes only one data field.

In an embodiment, the RLC stands for radio link control.

In an embodiment, the first PDU is an RLC UMD PDU.

In a sub-embodiment of this embodiment, the first PDU includes a data field.

In a sub-embodiment of this embodiment, the first PDU includes an RLC header.

In a sub-embodiment of this embodiment, the RLC header of the first PDU includes a segmentation info (SI) field.

In a sub-embodiment of this embodiment, the RLC header of the first PDU includes an SN field, and the SN field includes 6 bits or 12 bits.

In a sub-embodiment of this embodiment, the RLC header of the first PDU includes a segment offset (SO) field, and the SO field includes 16 bits.

In an embodiment, the first PDU is an RLC AMD PDU.

In a sub-embodiment of this embodiment, the first PDU includes a data field.

In a sub-embodiment of this embodiment, the first PDU includes an RLC header.

In a sub-embodiment of this embodiment, the RLC header of the first PDU includes an SN field, and the SN field includes 12 bits or 18 bits.

In a sub-embodiment of this embodiment, the RLC header of the first PDU includes a D/C field.

In a sub-embodiment of this embodiment, the RLC header of the first PDU includes a polling bit (P) field.

In a sub-embodiment of this embodiment, the RLC header of the first PDU includes an SI field.

In a sub-embodiment of this embodiment, the RLC header of the first PDU includes at least one reserved bit.

In an embodiment, the first PDU is an RLC STATUS PDU.

In a sub-embodiment of this embodiment, the first PDU includes a STATUS PDU payload.

In a sub-embodiment of this embodiment, the first PDU includes an RLC header.

In a sub-embodiment of this embodiment, the RLC header of the first PDU includes a D/C field.

In a sub-embodiment of this embodiment, the RLC header of the first PDU includes a control PDU type (CPT) field.

In a sub-embodiment of this embodiment, the RLC header of the first PDU includes an SN field.

In an embodiment, the first PDU is a MAC PDU.

In a sub-embodiment of this embodiment, the first PDU includes only one MAC subPDU.

In a sub-embodiment of this embodiment, the first PDU includes at least one MAC subPDU.

In a sub-embodiment of this embodiment, the first PDU includes a plurality of MAC subPDUs.

In an embodiment, the first PDU is a MAC subPDU.

In a sub-embodiment of this embodiment, the first PDU includes a MAC SDU.

In a sub-embodiment of this embodiment, the first PDU includes a MAC control element (MAC CE).

In a sub-embodiment of this embodiment, the first PDU includes a padding.

In a sub-embodiment of this embodiment, the first PDU includes a MAC subheader.

In a sub-embodiment of this embodiment, the MAC subheader of the first PDU is associated with a MAC SDU.

In a sub-embodiment of this embodiment, the MAC subheader of the first PDU is associated with a MAC CE.

In a sub-embodiment of this embodiment, the MAC subheader of the first PDU is associated with a padding.

In a sub-embodiment of this embodiment, the MAC subheader of the first PDU includes at least one reserved bit (R).

In a sub-embodiment of this embodiment, the MAC subheader of the first PDU includes a format (F) field.

In a sub-embodiment of this embodiment, the MAC subheader of the first PDU includes a length (L) field.

In a sub-embodiment of this embodiment, the MAC subheader of the first PDU includes a logical channel identifier (LCID) field.

In a sub-embodiment of this embodiment, the MAC subheader of the first PDU includes an extended LCID (eLCID) field.

In an embodiment, the first PDU is a PDU of the first protocol layer.

In an embodiment, the first PDU is transmitted through a sidelink shared channel (SL-SCH).

In an embodiment, the first PDU is transmitted through a downlink shared channel (DL-SCH).

In an embodiment, the first PDU is transmitted through an uplink shared channel (UL-SCH).

In an embodiment, any two protocol headers in the first protocol header set are added by a same node.

In an embodiment, any two protocol headers in the first protocol header set are removed by a same node.

In an embodiment, any two protocol headers in the first protocol header set are added by two different nodes.

In an embodiment, any two protocol headers in the first protocol header set are removed by two different nodes.

In an embodiment, formats of any two protocol headers in the first protocol header set are the same.

In an embodiment, at least two protocol headers in the first protocol header set are added by a same node.

In an embodiment, at least two protocol headers in the first protocol header set are removed by a same node.

In an embodiment, at least two protocol headers in the first protocol header set are added by two different nodes.

In an embodiment, at least two protocol headers in the first protocol header set are removed by two different nodes.

In an embodiment, formats of at least two protocol headers in the first protocol header set are the same.

In an embodiment, no bit outside the first protocol header set is included between any two protocol headers in the first protocol header set.

In an embodiment, no bit of the first protocol layer outside the first protocol header set is included between any two protocol headers in the first protocol header set.

In an embodiment, no bit other than a protocol header is included between any two protocol headers in the first protocol header set.

In an embodiment, at least one protocol header outside the first protocol header set is included between two protocol headers in the first protocol header set.

In an embodiment, at least one protocol header that is at the first protocol layer and that is outside the first protocol header set is included between two protocol headers in the first protocol header set.

In an embodiment, the first protocol header set includes at least two protocol headers.

In an embodiment, the first protocol header set includes two protocol headers.

In an embodiment, the first protocol header set includes three protocol headers.

In an embodiment, a quantity of protocol headers in the first protocol header set is predefined.

In an embodiment, a quantity of protocol headers in the first protocol header set is default.

In an embodiment, a quantity of protocol headers in the first protocol header set is preconfigured.

In an embodiment, a quantity of protocol headers in the first protocol header set is explicitly indicated.

In an embodiment, a quantity of protocol headers in the first protocol header set is implicitly indicated.

In an embodiment, the first protocol header set includes only the first protocol header and the second protocol header.

In an embodiment, the first protocol layer is an SDAP sublayer, and any protocol header in the first protocol header set is an SDAP header.

In an embodiment, the first protocol layer is a PDCP sublayer, and any protocol header in the first protocol header set is a PDCP header.

In an embodiment, the first protocol layer is an RLC sublayer, and any protocol header in the first protocol header set is an RLC header.

In an embodiment, the first protocol layer is a MAC sublayer, and any protocol header in the first protocol header set is a MAC subheader.

In an embodiment, the first protocol layer is a protocol layer between an SDAP sublayer and a PDCP sublayer.

In an embodiment, the first protocol layer is a protocol layer between a PDCP sublayer and an RLC sublayer.

In an embodiment, the first protocol layer is a protocol layer between an RLC sublayer and a MAC sublayer.

In an embodiment, the first unit includes one PDU.

In an embodiment, the first unit includes one SDU.

In an embodiment, the first unit includes a MAC CE.

In an embodiment, the first unit is a PDCP SDU.

In an embodiment, the first unit is an RLC SDU.

In an embodiment, the first unit is a MAC subPDU.

In an embodiment, the first unit is a MAC SDU.

In an embodiment, the first unit is a MAC CE.

In an embodiment, the first protocol header indicates a receiving end.

In an embodiment, the first protocol header indicates a destination address.

In an embodiment, the first protocol header indicates an LCID.

In an embodiment, the first protocol header indicates an eLCID.

In an embodiment, the first protocol header indicates a size of the second protocol header.

In an embodiment, the first protocol header indicates the second protocol header.

In an embodiment, the first protocol header indicates a receiving end.

In an embodiment, the second protocol header indicates an LCID.

In an embodiment, the second protocol header indicates a destination address.

In an embodiment, the second protocol header indicates an eLCID.

In an embodiment, the second protocol header indicates a size of the first unit.

In an embodiment, the second protocol header indicates whether a protocol header in the first protocol header set is included.

In an embodiment, the second protocol header indicates a size of a protocol header in the first protocol header set.

### Embodiment 2

Embodiment 2 describes a schematic diagram of a network architecture according to an embodiment of this application, as shown in FIG. 2. FIG. 2 describes a network architecture 200 of a 5G new radio (NR)/long-term evolution (LTE)/long-term evolution advanced (LTE-A) system. The 5G NR/LTE/LTE-A network architecture 200 may be referred to as a 5G system (5GS)/an evolved packet system (EPS) 200, or some other appropriate terminologies. The 5GS/EPS 200 includes at least one of a user equipment (UE) 201, a radio access network (RAN) 202, a 5G core network (5GC)/evolved packet core (EPC) 210, a home subscriber server (HSS)/unified data management (UDM) 220, and an internet service 230. The SGS/EPS may be interconnected to other access networks, but for simplicity, these entities/interfaces are not shown. As shown in the figure, the 5GS/EPS provides a packet-switched service. However, a person skilled in the art may easily understand that various concepts presented throughout this application may be extended to a network providing a circuit-switched service or another cellular network. The RAN includes a node 203 and another node 204. The node 203 provides a user and control plane protocol termination towards the UE 201. The node 203 may be connected to the another node 204 through an Xn interface (for example, backhaul)/X2 interface. The node 203 may also be referred to as a base station, a base transceiver station, a radio base station, a radio transceiver, a transceiver function, a basic service set (BSS), an extended service set (ESS), a transmission and reception point (TRP), or some other appropriate terminologies. The node 203 provides an access point to the 5GC/EPC 210 for the UE 201. An example of the UE 201 includes a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, an unmanned aerial vehicle, an aircraft, a narrow band internet of things device, a machine type communication device, a land vehicle, an automobile, a wearable device, or any other similar functional apparatus. A person skilled in the art may alternatively refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other appropriate terminologies. The node 203 is connected to the 5GC/EPC 210 through an S1/NG interface. The 5GC/EPC 210 includes a mobility management entity (MME)/authentication management field (AMF)/session management function (SMF) 211, another MME/AMF/SMF 214, a service gateway (S-GW)/user plane function (UPF) 212, and a packet data network gateway (P-GW)/UPF 213. The MME/AMF/SMF 211 is a control node that processes signaling between the UE 201 and the 5GC/EPC 210. Generally, the MME/AMF/SMF 211 provides bearer and connection management. All user internet protocol (IP) packets are delivered by using the S-GW/UPF 212, and the S-GW/UPF 212 is connected to the P-GW/UPF 213. The P-GW provides UE IP address allocation and other functions. The P-GW/UPF 213 is connected to the internet service 230. The internet service 230 includes an internet protocol service corresponding to an operator, and may specifically include internet, intranet, IP multimedia subsystem (IMS), and packet-switched streaming services.

In an embodiment, the UE 201 is connected to both the node 203 and the node 204.

In an embodiment, a protocol stack of the UE 201 terminates at the node 203 and the node 204.

In an embodiment, the UE 201 corresponds to the first node in this application.

In an embodiment, the UE 201 is a user equipment (UE).

In an embodiment, the node 203 corresponds to the second node in this application.

In an embodiment, the node 203 is a base station device (BS).

In an embodiment, the node 203 is a user equipment.

In an embodiment, the node 203 is a relay.

In an embodiment, the node 203 is a gateway.

In an embodiment, the node 203 supports transmission in a terrestrial network.

In an embodiment, the node 203 supports transmission in a non-terrestrial network.

In an embodiment, the node 203 supports transmission in a network with a large delay difference.

In an embodiment, the node 204 corresponds to the third node in this application.

In an embodiment, the node 204 is a base station device.

In an embodiment, the node 204 is a user equipment.

In an embodiment, the node 204 is a relay.

In an embodiment, the node 204 is a gateway.

In an embodiment, the node 204 supports transmission in a terrestrial network.

In an embodiment, the node 204 supports transmission in a non-terrestrial network.

In an embodiment, the node 204 supports transmission in a network with a large delay difference.

In an embodiment, the node 203 is connected to the node 204 through ideal backhaul.

In an embodiment, the node 203 is connected to the node 204 through non-ideal backhaul.

In an embodiment, the node 203 and the node 204 provide a radio resource for the UE 201 at the same time.

In an embodiment, the node 203 and the node 204 do not provide a radio resource to the UE 201 at the same time.

In an embodiment, the node 203 and the node 204 are a same node.

In an embodiment, the node 203 and the node 204 are two different nodes.

In an embodiment, types of the node 203 and the node 204 are the same.

In an embodiment, types of the node 203 and the node 204 are different.

In an embodiment, multi-hop transmission is included between the node 203 and the node 204.

In an embodiment, direct transmission is performed between the node 203 and the node 204.

In an embodiment, the user equipment supports transmission in a non-terrestrial network (NTN).

In an embodiment, the user equipment supports transmission in a terrestrial network (TN).

In an embodiment, the user equipment supports transmission in a network with a large delay difference.

In an embodiment, the user equipment supports dual connection (DC) transmission.

In an embodiment, the user equipment includes a handheld terminal.

In an embodiment, the user equipment includes a wearable device.

In an embodiment, the user equipment includes an aircraft.

In an embodiment, the user equipment includes a vehicle-mounted terminal.

In an embodiment, the user equipment includes a watercraft.

In an embodiment, the user equipment includes an internet of things terminal.

In an embodiment, the user equipment includes a terminal of the industrial internet of things.

In an embodiment, the user equipment includes a device supporting low-delay and high-reliability transmission.

In an embodiment, the user equipment includes a test device.

In an embodiment, the user equipment includes a signaling tester.

In an embodiment, the base station device includes a base transceiver station (BTS).

In an embodiment, the base station device includes a NodeB (NB).

In an embodiment, the base station device includes a gNB.

In an embodiment, the base station device includes an eNB.

In an embodiment, the base station device includes an ng-eNB.

In an embodiment, the base station device includes an en-gNB.

In an embodiment, the base station device includes a flight platform device.

In an embodiment, the base station device includes a satellite device.

In an embodiment, the base station device includes a macro cellular base station.

In an embodiment, the base station device includes a micro cell base station.

In an embodiment, the base station device includes a pico cell base station.

In an embodiment, the base station device includes a home base station (Femtocell).

In an embodiment, the base station device includes a transmission and reception point (TRP).

In an embodiment, the base station device includes a centralized unit (CU).

In an embodiment, the base station device includes a distributed unit (DU).

In an embodiment, the base station device includes a test device.

In an embodiment, the base station device includes a signaling tester.

In an embodiment, the base station device includes an IAB-node.

In an embodiment, the base station device includes an IAB-donor.

In an embodiment, the base station device includes an IAB-donor-CU.

In an embodiment, the base station device includes an IAB-donor-DU.

In an embodiment, the base station device includes an IAB-DU.

In an embodiment, the base station device includes an IAB-MT.

In an embodiment, the relay includes a relay.

In an embodiment, the relay includes an L3 relay.

In an embodiment, the relay includes an L2 relay.

In an embodiment, the relay includes a router.

In an embodiment, the relay includes a switch.

In an embodiment, the relay includes a user equipment.

In an embodiment, the relay includes a base station device.

### Embodiment 3

Embodiment 3 describes a schematic diagram of an embodiment of radio protocol architectures of a user plane and a control plane according to this application, as shown in FIG. 3. FIG. 3 is a schematic diagram of an embodiment of radio protocol architectures used for a user plane 350 and a control plane 300. In FIG. 3, the radio protocol architecture used for the control plane 300 is represented by three layers: layer 1, layer 2, and layer 3. Layer 1 (layer L1) is the lowest layer and implements various physical layer (PHY) signal processing functions. Layer L1 is referred to as PHY 301 in this specification. Layer 2 (layer L2) 305 is above the PHY 301, and includes a medium access control (MAC) sublayer 302, a radio link control (RLC) sublayer 303, and a packet data convergence protocol (PDCP) sublayer 304. The PDCP sublayer 304 provides multiplexing between different radio bearers and logical channels. The PDCP sublayer 304 further provides security by encrypting a data packet, and provides mobility support. The RLC sublayer 303 provides segmentation and reassembly of an upper-layer data packet, retransmission of a lost data packet, and rearrangement of data packets, to compensate for unordered reception caused by a hybrid automatic repeat request (HARQ). The MAC sublayer 302 provides multiplexing between a logical channel and a transport channel. The MAC sublayer 302 is further responsible for allocating various radio resources (for example, resource blocks) in a cell. The MAC sublayer 302 is further responsible for a HARQ operation. A radio resource control (RRC) sublayer 306 in layer 3 (layer L3) in the control plane 300 is responsible for obtaining a radio resource (that is, a radio bearer) and configuring a lower layer by using RRC signaling. The radio protocol architecture of the user plane 350 includes layer 1 (layer L1) and layer 2 (layer L2). The radio protocol architecture of the user plane 350 includes a physical layer 351, a PDCP sublayer 354 in layer L2 355, an RLC sublayer 353 in layer L2 355, and a MAC sublayer 352 in layer L2 355 that are substantially the same as corresponding layers and sublayers in the control plane 300. However, the PDCP sublayer 354 further provides header compression for an upper-layer data packet to reduce radio transmission overheads. Layer L2 355 in the user plane 350 further includes a service data adaptation protocol (SDAP) sublayer 356. The SDAP sublayer 356 is responsible for mapping between a QoS flow and a data radio bearer (DRB), to support diversity of services.

In an embodiment, the radio protocol architecture in FIG. 3 is applicable to the first node in this application.

In an embodiment, the radio protocol architecture in FIG. 3 is applicable to the second node in this application.

In an embodiment, the radio protocol architecture in FIG. 3 is applicable to the third node in this application.

In an embodiment, the first PDU in this application is generated at the SDAP 356.

In an embodiment, the first PDU in this application is generated at a protocol layer between the SDAP 356 and the PDCP 354.

In an embodiment, the first PDU in this application is generated at the PDCP 304 or the PDCP 354.

In an embodiment, the first PDU in this application is generated at a protocol layer between the PDCP 304 and the RLC 303.

In an embodiment, the first PDU in this application is generated at a protocol layer between the PDCP 354 and the RLC 353.

In an embodiment, the first PDU in this application is generated at the RLC 303 or the RLC 353.

In an embodiment, the first PDU in this application is generated at a protocol layer between the RLC 303 and the MAC 302.

In an embodiment, the first PDU in this application is generated at a protocol layer between the RLC 353 and the MAC 352.

In an embodiment, the first PDU in this application is generated at the MAC 302 or the MAC 352.

### Embodiment 4

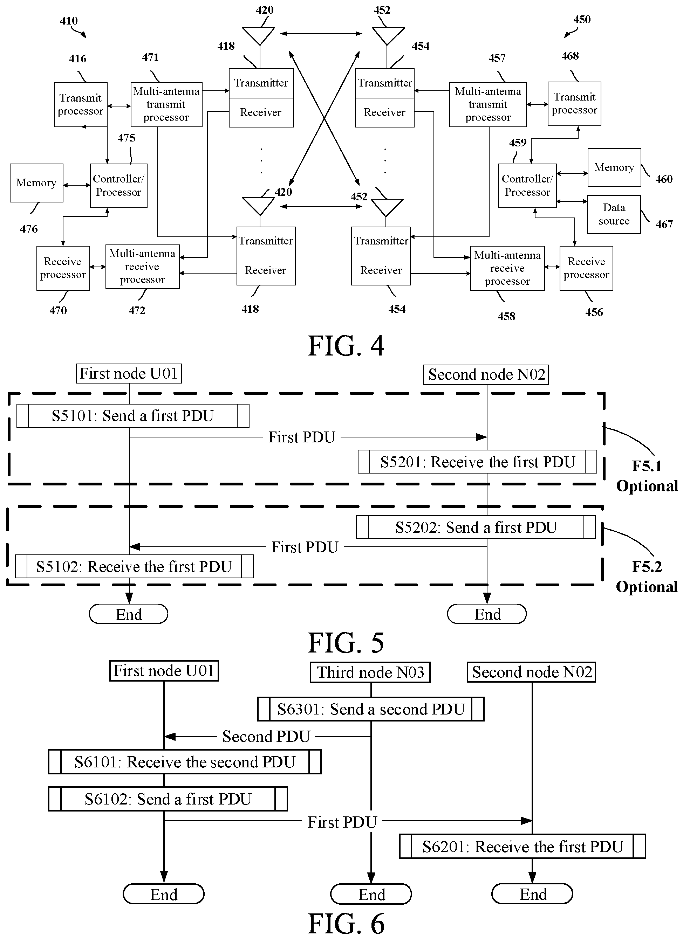

Embodiment 4 describes a schematic diagram of a first communication device and a second communication device according to this application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, transmitters/receivers 454, and antennas 452.

The second communication device 410 includes a controller/processor 475, a memory 476, a receive processor 470, a transmit processor 416, a multi-antenna receive processor 472, a multi-antenna transmit processor 471, transmitters/receivers 418, and antennas 420.

During transmission from the second communication device 410 to the first communication device 450, at the second communication device 410, an upper-layer data packet from a core network is provided to the controller/processor 475. The controller/processor 475 implements functionality of layer L2. During transmission from the second communication device 410 to the first communication device 450, the controller/processor 475 provides header compression, encryption, packet segmentation and rearrangement, multiplexing between logical and transport channels, and radio resource allocation for the first communication device 450 based on various priorities. The controller/processor 475 is further responsible for retransmission of a lost packet, and signaling to the first communication device 450. The transmit processor 416 and the multi-antenna transmit processor 471 implement various signal processing functions for layer L1 (that is, a physical layer). The transmit processor 416 implements coding and interleaving to promote forward error correction (FEC) at the second communication device 410, and mapping of a signal cluster based on various modulation schemes (for example, binary phase shift keying (BPSK), quadrature phase shift keying (QPSK), M phase shift keying (M-PSK), and M quadrature amplitude modulation (M-QAM)). The multi-antenna transmit processor 471 performs digital spatial precoding on a coded and modulated symbol, including precoding based on a codebook and precoding based on non-codebook, and beam forming processing, to generate one or more spatial streams. Then, the transmit processor 416 maps each spatial stream to a subcarrier, and multiplexes the spatial stream with a reference signal (for example, a pilot) in time domain and/or frequency domain, and then uses inverse fast Fourier transform (IFFT) to generate a physical channel carrying a time domain multi-carrier symbol stream. Subsequently, the multi-antenna transmit processor 471 sends an analog precoding/beam forming operation on the time domain multi-carrier symbol stream. Each transmitter 418 transforms a baseband multi-carrier symbol stream provided by the multi-antenna transmit processor 471 into a radio frequency stream, and then provides the radio frequency stream to the different antennas 420.

During transmission from the second communication device 410 to the first communication device 450, at the first communication device 450, each receiver 454 receives a signal through the corresponding antenna 452 thereof. Each receiver 454 recovers information modulated onto a radio frequency carrier, transforms a radio frequency stream into a baseband multi-carrier symbol stream, and provides the baseband multi-carrier symbol stream to the receive processor 456. The receive processor 456 and the multi-antenna receive processor 458 implement various signal processing functions of layer L1. The multi-antenna receive processor 458 receives an analog precoding/beam forming operation on the baseband multi-carrier symbol stream that is from the receiver 454. The receive processor 456 uses fast Fourier transform (FFT) to transform a baseband multi-carrier symbol stream on which the analog precoding/beam forming operation is received from time domain to frequency domain. In frequency domain, a physical layer data signal and a reference signal are demultiplexed by the receive processor 456. The reference signal is used for channel estimation, and after multi-antenna detection is performed on the data signal in the multi-antenna receive processor 458, any spatial stream that uses the first communication device 450 as a destination is recovered. A symbol in each spatial stream is demodulated and recovered in the receive processor 456, and a soft decision is generated. Subsequently, the receive processor 456 decodes and deinterleaves the soft decision to recover upper-layer data and a control signal transmitted by the second communication device 410 on the physical channel. Subsequently, the upper-layer data and the control signal are provided to the controller/processor 459. The controller/processor 459 implements a function of layer L2. The controller/processor 459 may be associated with the memory 460 that stores program code and data. The memory 460 may be referred to as a computer-readable medium. During transmission from the second communication device 410 to the second communication device 450, the controller/processor 459 provides demultiplexing between transport and logical channels, packet reassembly, decryption, header decompression, and control signal processing to recover an upper-layer data packet from a core network. Subsequently, the upper-layer data packet is provided to all protocol layers above layer L2. Various control signals may also be provided to L3 for processing of L3.

During transmission from the first communication device 450 to the second communication device 410, the data source 467 is used at the first communication device 450 to provide the upper-layer data packet to the controller/processor 459. The data source 467 indicates all protocol layers above layer L2. Similar to a sending function at the second communication device 410 described in transmission from the second communication device 410 to the first communication device 450, the controller/processor 459 implements header compression, encryption, packet segmentation, rearrangement, and multiplexing between logical and transport channels based on radio resource allocation, and implements a function of layer L2 for a user plane and a control plane. The controller/processor 459 is further responsible for retransmission of a lost packet, and signaling to the second communication device 410. The transmit processor 468 performs modulation mapping and channel coding. The multi-antenna transmit processor 457 performs digital multi-antenna spatial precoding, including precoding based on a codebook and precoding based on non-codebook, and beam forming. Subsequently, the transmit processor 468 modulates a generated spatial stream into a multi-carrier/single-carrier symbol stream. After an analog precoding/beam forming operation is performed in the multi-antenna transmit processor 457, the multi-carrier/single-carrier symbol stream is provided to the different antennas 452 by using the transmitter 454. Each transmitter 454 first transforms a baseband symbol stream provided by the multi-antenna transmit processor 457 into a radio frequency symbol stream, and then provides the radio frequency symbol stream to the antenna 452.

During transmission from the first communication device 450 to the second communication device 410, a function at the second communication device 410 is similar to a receiving function at the first communication device 450 described in transmission from the second communication device 410 to the first communication device 450. Each receiver 418 receives a radio frequency signal by using the corresponding antenna 420 thereof, transforms the received radio frequency signal into a baseband signal, and provides the baseband signal to the multi-antenna receive processor 472 and the receive processor 470. The receive processor 470 and the multi-antenna receive processor 472 jointly implement a function of layer L1. The controller/processor 475 implements a function of layer L2. The controller/processor 475 may be associated with the memory 476 that stores program code and data. The memory 476 may be referred to as a computer-readable medium. During transmission from the first communication device 450 to the second communication device 410, the controller/processor 475 provides demultiplexing between transport and logical channels, packet reassembly, decryption, header decompression, and control signal processing to recover an upper-layer data packet from UE 450. The upper-layer data packet from the controller/processor 475 may be provided to the core network.

In an embodiment, the first communication device 450 includes: at least one processor and at least one memory, where the at least one memory includes computer program code. The at least one memory and the computer program code are configured to be used with the at least one processor, and the first communication device 450 includes at least: a first processor, performing an operation on a first PDU, where the first PDU includes a first protocol header set and a first unit; the operation is a receiving operation, or the operation is a sending operation; the first protocol header set includes at least a first protocol header and a second protocol header; any protocol header in the first protocol header set belongs to a first protocol layer, the first protocol layer is not higher than an SDAP sublayer, and the first protocol layer is not lower than a MAC sublayer; and each protocol header in the first protocol header set indicates the first unit.

In an embodiment, the first communication device 450 includes: a memory storing a program of computer-readable instructions, where the program of computer-readable instructions generates an action when being executed by at least one processor, and the action includes: A first processor performs an operation on a first PDU, where the first PDU includes a first protocol header set and a first unit; the operation is a receiving operation, or the operation is a sending operation; the first protocol header set includes at least a first protocol header and a second protocol header; any protocol header in the first protocol header set belongs to a first protocol layer, the first protocol layer is not higher than an SDAP sublayer, and the first protocol layer is not lower than a MAC sublayer; and each protocol header in the first protocol header set indicates the first unit.

In an embodiment, the second communication device 410 includes: at least one processor and at least one memory, where the at least one memory includes computer program code. The at least one memory and the computer program code are configured to be used with the at least one processor. The second communication device 410 includes at least: a second processor, performing an operation on a first PDU, where the first PDU includes a first protocol header set and a first unit; the operation is a sending operation, or the operation is a receiving operation; the first protocol header set includes at least a first protocol header and a second protocol header; any protocol header in the first protocol header set is a protocol header of a first protocol layer, the first protocol layer is not higher than an SDAP sublayer, and the first protocol layer is not lower than a MAC sublayer; and each protocol header in the first protocol header set indicates the first unit.

In an embodiment, the second communication device 410 includes: a memory storing a program of computer-readable instructions, where the program of computer-readable instructions generates an action when being executed by at least one processor, and the action includes: A second processor performs an operation on a first PDU, where the first PDU includes a first protocol header set and a first unit; the operation is a sending operation, or the operation is a receiving operation; the first protocol header set includes at least a first protocol header and a second protocol header; any protocol header in the first protocol header set is a protocol header of a first protocol layer, the first protocol layer is not higher than an SDAP sublayer, and the first protocol layer is not lower than a MAC sublayer; and each protocol header in the first protocol header set indicates the first unit.

In an embodiment, at least one of the antenna 452, the receiver 454, the receive processor 456, and the controller/processor 459 is configured to receive a first PDU.

In an embodiment, at least one of the antenna 420, the transmitter 418, the transmit processor 416, and the controller/processor 475 is configured to send a first PDU.

In an embodiment, at least one of the antenna 452, the transmitter 454, the transmit processor 468, and the controller/processor 459 is configured to send a first PDU.

In an embodiment, at least one of the antenna 420, the receiver 418, the receive processor 470, and the controller/processor 475 is configured to receive a first PDU.

In an embodiment, the first communication device 450 corresponds to the first node in this application.

In an embodiment, the second communication device 410 corresponds to the second node in this application.

In an embodiment, the first communication device 450 is a user equipment.

In an embodiment, the first communication device 450 is a user equipment supporting a large delay difference.

In an embodiment, the first communication device 450 is a user equipment supporting an NTN.

In an embodiment, the first communication device 450 is an aircraft device.

In an embodiment, the first communication device 450 has a positioning capability.

In an embodiment, the first communication device 450 does not have a positioning capability.

In an embodiment, the first communication device 450 is a user equipment supporting a TN.

In an embodiment, the second communication device 410 is a base station device.

In an embodiment, the second communication device 410 is a base station device supporting a TN.

In an embodiment, the second communication device 410 is a base station device supporting an NTN.

In an embodiment, the second communication device 410 is a base station device supporting a large delay difference.

In an embodiment, the second communication device 410 is a satellite device.

In an embodiment, the second communication device 410 is a flight platform device.

In an embodiment, the second communication device 410 is a base station device supporting a TN.

In an embodiment, the second communication device 410 is an 802.11 device.

In an embodiment, the second communication device 410 is a gNB/eNB/ng-eNB.

### Embodiment 5

Embodiment 5 describes a flowchart of wireless transmission according to an embodiment of this application, as shown in FIG. 5. It should be particularly noted that the sequence in this example does not limit a signal transmission sequence and an implementation sequence in this application.

For a **first node U01** in step S5101, a first PDU is sent. In step S5102, a first PDU is received.

For a **second node N02** in step S5201, the first PDU is received. In step S5202, the first PDU is sent.

In Embodiment 5, the first PDU includes a first protocol header set and a first unit. The first protocol header set includes at least a first protocol header and a second protocol header. Any protocol header in the first protocol header set is a protocol header of a first protocol layer, the first protocol layer is not higher than an SDAP sublayer, and the first protocol layer is not lower than a MAC sublayer. Each protocol header in the first protocol header set indicates the first unit.

In an embodiment, the first node U01 is a user equipment.

In an embodiment, the first node U01 is a base station device.

In an embodiment, the first node U01 is a relay device.

In an embodiment, the second node N02 is a base station device.

In an embodiment, the second node N02 is a user equipment.

In an embodiment, the second node N02 is a relay device.

In an embodiment, the first node U01 and the second node N02 are connected through a Uu interface.

In an embodiment, the first node U01 and the second node N02 are connected through an Xn interface.

In an embodiment, the first node U01 and the second node N02 are connected through an X2 interface.

In an embodiment, the first node U01 and the second node N02 are connected through a PC5 interface.

In an embodiment, the first node U01 and the second node N02 are connected through an air interface.

In an embodiment, the first node U01 and the second node N02 are connected through an NR Uu interface.

Typically, the first node U01 is a user equipment, and the second node N02 is a base station device.

Typically, the first node U01 is a user equipment, and the second node N02 is user equipment.

Typically, the first node U01 is a user equipment, and the second node N02 is a relay device.

Typically, the first node U01 is a base station device, and the second node N02 is a base station device.

In an embodiment, a dashed-line box F5.1 is optional.

In an embodiment, a dashed-line box F5.2 is optional.

In an embodiment, only one of the dashed-line box F5.1 and the dashed-line box F5.2 exists.

In an embodiment, the dashed-line box F5.1 exists, and the dashed-line box F5.2 does not exist.

In a sub-embodiment of this embodiment, the first node U01 sends the first PDU, and the second node N02 receives the first PDU.

In an embodiment, the dashed-line box F5.1 does not exist, and the dashed-line box F5.2 exists.

In a sub-embodiment of this embodiment, the second node N02 sends the first PDU, and the first node U01 receives the first PDU.

### Embodiment 6

Embodiment 6 describes a flowchart of wireless transmission according to another embodiment of this application, as shown in FIG. 6. It should be particularly noted that the sequence in this example does not limit a signal transmission sequence and an implementation sequence in this application.

For a **first node U01** in step S6101, a second PDU is received. In step S6102, a first PDU is sent.

For a **second node N02** in step S6201, the first PDU is received.

For a **third node N03** in step S6301, the second PDU is sent.

In Embodiment 6, the second PDU includes a second protocol header and a first unit. The first PDU includes the second PDU and a first protocol header. The first PDU terminates between the first node and the second node, and the second PDU terminates between the first node and the third node. The first protocol header and the second protocol header are two different protocol headers.

In an embodiment, a sending end of the first PDU is the first node U01, and a receiving end of the first PDU is the second node N02.

In an embodiment, a sending end of the second PDU is the third node N03, and a receiving end of the second PDU is the first node U01.

In an embodiment, the first PDU is directly sent by the first node U01 to the second node N02.

In an embodiment, the first PDU is indirectly sent by the first node U01 to the second node N02.

In a sub-embodiment of this embodiment, at least one base station device is included between the first node U01 and the second node N02.

In a sub-embodiment of this embodiment, at least one UE device is included between the first node U01 and the second node N02.

In an embodiment, the second PDU is directly sent by the third node N03 to the first node U01.

In an embodiment, the second PDU is indirectly sent by the third node N03 to the first node U01.

In a sub-embodiment of this embodiment, at least one base station device is included between the first node U01 and the third node N03.

In a sub-embodiment of this embodiment, at least one UE device is included between the first node U01 and the third node N03.

In an embodiment, the third node is an NTN device, and the first node is a TN device.

In an embodiment, the third node is an NTN device, and the first node is an NTN device.

In an embodiment, the third node is a TN device, and the first node is a TN device.

In an embodiment, a control plane of the second node terminates at the third node.

In an embodiment, a control plane of the second node terminates at the first node and the third node.

In an embodiment, the first PDU includes signaling of a protocol layer between a MAC layer and an RLC layer.

In an embodiment, the first PDU includes signaling of a protocol layer between a PDCP layer and an RLC layer.

In an embodiment, the first PDU includes signaling of a protocol layer between a PDCP layer and an SDAP layer.

In an embodiment, the first PDU includes MAC layer signaling.

In an embodiment, the first PDU includes RLC layer signaling.

In an embodiment, the first PDU includes PDCP layer signaling.

In an embodiment, the first PDU includes SDAP layer signaling.

In an embodiment, the first PDU is transmitted through a container L2.

In an embodiment, the first PDU is transmitted through an inter-protocol interface.

In an embodiment, the first PDU is transmitted through an interface between a 3GPP protocol and a non-3GPP protocol.

In an embodiment, the first PDU includes information of the first node U01.

In an embodiment, the first PDU includes an identifier of the first node U01.

In an embodiment, the first PDU includes information of the second node N02.

In an embodiment, the first PDU includes an identifier of the second node N02.

In an embodiment, the second PDU includes signaling of a protocol layer between a MAC layer and an RLC layer.

In an embodiment, the second PDU includes signaling of a protocol layer between a PDCP layer and an RLC layer.

In an embodiment, the second PDU includes signaling of a protocol layer between a PDCP layer and an SDAP layer.

In an embodiment, the second PDU includes MAC layer signaling.

In an embodiment, the second PDU includes RLC layer signaling.

In an embodiment, the second PDU includes PDCP layer signaling.

In an embodiment, the second PDU includes SDAP layer signaling.

In an embodiment, the second PDU is transmitted through a container L2.

In an embodiment, the second PDU is transmitted through an inter-protocol interface.

In an embodiment, the second PDU is transmitted through an interface between a 3GPP protocol and a non-3GPP protocol.

In an embodiment, the second PDU includes information of the first node U01.

In an embodiment, the second PDU includes an identifier of the first node U01.

In an embodiment, the second PDU includes information of the third node N03.

In an embodiment, the second PDU includes an identifier of the third node N03.

In an embodiment, the third node N03 is a base station device.

In an embodiment, the third node N03 is a user equipment.

In an embodiment, the third node N03 is a relay device.

In an embodiment, the first node U01 and the third node N03 are connected through a Uu interface.

In an embodiment, the first node U01 and the third node N03 are connected through an Xn interface.

In an embodiment, the first node U01 and the third node N03 are connected through an X2 interface.

In an embodiment, the first node U01 and the third node N03 are connected through a PC5 interface.

In an embodiment, the first node U01 and the third node N03 are connected through an air interface.

In an embodiment, the first node U01 and the third node N03 are connected through an NR Uu interface.

In an embodiment, a receiving end of the first PDU is the second node.

In an embodiment, the first PDU is generated by the first node.

In an embodiment, the first PDU is assembled by the first node.

In an embodiment, the first protocol header in the first PDU is added by the first node.

In an embodiment, a sending end of the second PDU is the third node.

In an embodiment, the second PDU is generated by the third node.

In an embodiment, the second PDU is assembled by the third node.

In an embodiment, the second protocol header in the second PDU is added by the third node.

In an embodiment, a protocol layer to which the second PDU belongs is higher than a protocol layer to which the first PDU belongs.

In an embodiment, a protocol layer to which the second PDU belongs is the same as a protocol layer to which the first PDU belongs.

In an embodiment, the second PDU includes the second protocol header and the first unit.

In an embodiment, one PDU in the second PDU includes the second protocol header and the first unit.

In an embodiment, a higher-layer PDU in the second PDU includes the second protocol header and the first unit.

In an embodiment, no bit outside a first protocol header set is included between the second protocol header and the first protocol header.

In an embodiment, no bit that is of a first protocol layer and that is outside a first protocol header set is included between the second protocol header and the first protocol header.

In an embodiment, at least one protocol header outside a first protocol header set is included between the second protocol header and the first protocol header.

In an embodiment, at least one protocol header that is at a first protocol layer and that is outside a first protocol header set is included between the second protocol header and the first protocol header.

### Embodiment 7

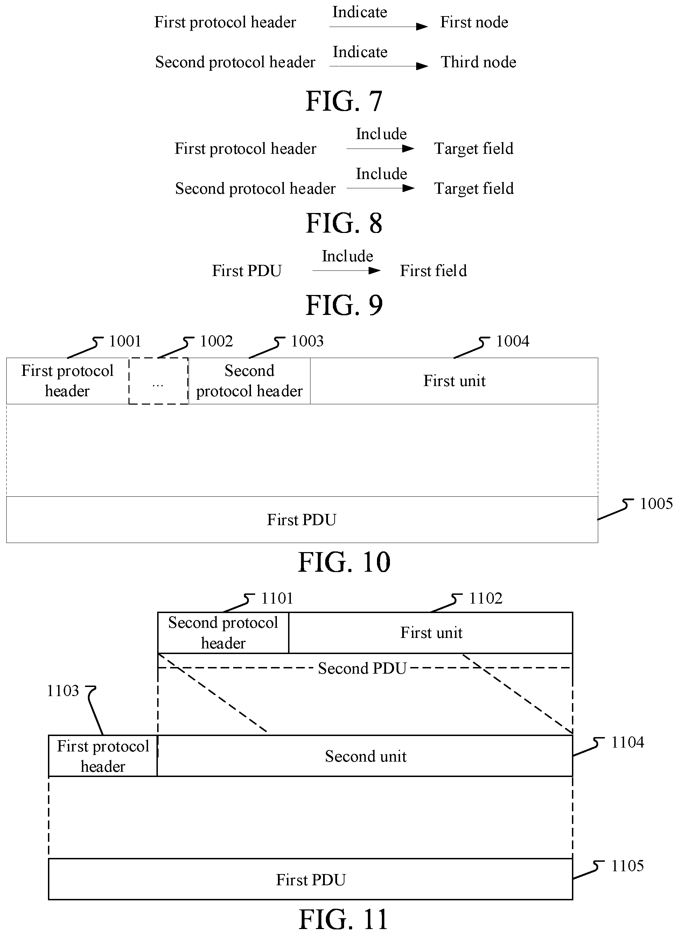

Embodiment 7 describes a schematic diagram in which a first protocol header indicates a first node, and a second protocol header indicates a third node according to this application, as shown in FIG. 7.

In Embodiment 7, the first protocol header indicates the first node, and the second protocol header indicates the third node.

In an embodiment, the first protocol header indicates a sending end of a first PDU, and the second protocol header indicates a sending end of a second PDU.

In an embodiment, the first protocol header indicates a receiving end of a first PDU, and the second protocol header indicates a receiving end of a first PDU.

In an embodiment, the first protocol header and the second protocol header are added by a second node.

In an embodiment, the first node decodes protocol headers in a first protocol header set sequentially.

In an embodiment, the first node and the third node are both user equipments, and the second node is a base station device.

In an embodiment, the first node and the third node are both user equipments, and the second node is a relay device.

In an embodiment, the first node, the second node, and the third node are all user equipments.

In an embodiment, the first node, the second node, and the third node are all base station devices.

In an embodiment, the first protocol header indicates an identifier of the first node.

In an embodiment, the first protocol header indicates a destination layer-2 ID of the first node.

In an embodiment, the first protocol header indicates top 8 bits of a destination layer-2 ID of the first node.

In an embodiment, an identifier of the first node is an identifier L2.

In an embodiment, an identifier of the first node is a destination layer-2 ID.

In an embodiment, an identifier of the first node is an SL-SCH MAC subheader.

In an embodiment, an identifier of the first node is a UE identifier.

In an embodiment, an identifier of the first node is a C-RNTI.

In an embodiment, an identifier of the first node is a G-RNTI.

In an embodiment, an identifier of the first node is a PCI.

In an embodiment, an identifier of the first node is a cell identifier.

In an embodiment, the second protocol header indicates an identifier of the third node.

In an embodiment, the second protocol header indicates a destination layer-2 ID of the third node.

In an embodiment, the second protocol header indicates top 8 bits of a destination layer-2 ID of the third node.

In an embodiment, an identifier of the third node is an identifier L2.

In an embodiment, an identifier of the third node is a destination layer-2 ID.

In an embodiment, an identifier of the third node is an SL-SCH MAC subheader.

In an embodiment, an identifier of the third node is a UE identifier.

In an embodiment, an identifier of the third node is a C-RNTI.

In an embodiment, an identifier of the third node is a G-RNTI.

In an embodiment, an identifier of the third node is a PCI.

In an embodiment, an identifier of the third node is a cell identifier.

In an embodiment, the first protocol header and the second protocol header are two fields in a same protocol header.

In an embodiment, the first protocol header and the second protocol header are two different protocol headers.

### Embodiment 8

Embodiment 8 describes a schematic diagram in which each of a first protocol header and a second protocol header includes a target field according to an embodiment of this application, as shown in FIG. 8.

In Embodiment 8, each of the first protocol header and the second protocol header includes a target field, and the target field in the first protocol header and the target field in the second protocol header are set to a same value.

In an embodiment, a first PDU is received by a first node, and the first PDU is sent by a second node.

In an embodiment, the first PDU is received by a node other than a first node.

In an embodiment, the first PDU is received by a third node.

In an embodiment, the first protocol header indicates a receiving end of a first PDU, and the second protocol header indicates a receiving end of a first PDU.

In an embodiment, the first protocol header indicates a sending end of a first PDU, and the second protocol header indicates a sending end of a first PDU.

In an embodiment, each protocol header in a first protocol header set includes a target field, and the target fields in any two protocol headers in the first protocol header set are set to a same value.

In an embodiment, the target field is a MAC field.

In an embodiment, the target field is an SRC field.

In an embodiment, the target field indicates a source layer-2 ID of a second node.

In an embodiment, the target field indicates top 16 bits of a source layer-2 ID of a second node.

In an embodiment, the target field in the first protocol header and the target field in the second protocol header are set to source layer-2 IDs.

In an embodiment, a first unit is a MAC sub-PDU, and the target field is an SRC field.

In an embodiment, a first unit is a MAC SDU, and the target field is an LCID field or an eLCID field.

In an embodiment, a first unit is a MAC CE, and the target field is an LCID field or an eLCID field.

In an embodiment, a first unit is a PDCP SDU, and the target field is a PDCP SN field.

In an embodiment, a first unit is an RLC SDU, and the target field is a CPT field.

In an embodiment, the first protocol header and the second protocol header are two fields in a same protocol header.

In an embodiment, the first protocol header and the second protocol header are two different protocol headers.

### Embodiment 9

Embodiment 9 describes a schematic diagram in which a first PDU includes a first field according to an embodiment of this application, as shown in FIG. 9.

In Embodiment 9, the first PDU includes the first field, and the first field indicates a quantity of protocol headers in a first protocol header set.

In an embodiment, the first field includes a positive integer quantity of bits.

In an embodiment, the first field includes one bit.

In an embodiment, the first field includes two bits.

In an embodiment, a value of the first field indicates the quantity of protocol headers in the first protocol header set.

In an embodiment, a first protocol header in the first PDU includes the first field, and the first protocol header is a 1^{st} protocol header in the first protocol header set.

In an embodiment, a first protocol header in the first PDU includes the first field, and the first protocol header is a protocol header farthest away from a first unit in the first protocol header set.

In an embodiment, the first field is a MAC PDU format version number (V) field in an SL-SCH MAC subheader in the first PDU.

In a sub-embodiment of this embodiment, the first field is used to determine a quantity of DST fields in the SL-SCH MAC subheader in the first PDU.

In a sub-embodiment of this embodiment, the first field is set to 0, and is used to determine that the SL-SCH MAC subheader in the first PDU includes only one DST field.

In an embodiment, the first field is a MAC PDU format version number (R) field in an SL-SCH MAC subheader in the first PDU.

In a sub-embodiment of this embodiment, the first field is used to determine that the SL-SCH MAC subheader in the first PDU includes only one DST field.

In a sub-embodiment of this embodiment, the first field is set to 1, and is used to determine that the SL-SCH MAC subheader in the first PDU includes only one DST field.

In a sub-embodiment of this embodiment, a V field in the SL-SCH MAC subheader in the first PDU is set to non-0.

In an embodiment, a first protocol header and a second protocol header are two fields in a same protocol header.

In an embodiment, a first protocol header and a second protocol header are two different protocol headers.

### Embodiment 10

Embodiment 10 describes a schematic diagram of a first PDU according to an embodiment of this application, as shown in FIG. 10. In FIG. 10, a box 1001 is a first protocol header, a box 1002 is another protocol header in a first protocol header set, a box 1003 is a second protocol header, a box 1004 is a first unit, and a box 1005 is a first PDU.

In Embodiment 10, the first PDU includes the first protocol header set and the first unit, and the first protocol header set includes at least the first protocol header and a second protocol header. The first protocol header and the second protocol header are two different protocol headers.

In an embodiment, the box 1202 in FIG. 10 is optional.

In an embodiment, the box 1202 in FIG. 10 includes at least one bit.

In an embodiment, the box 1202 in FIG. 10 includes at least one protocol header.

In an embodiment, the box 1202 in FIG. 10 does not exist.

In a sub-embodiment of this embodiment, the first PDU does not include any protocol header except the first protocol header and the second protocol header.

In an embodiment, the box 1202 in FIG. 10 exists.

In a sub-embodiment of this embodiment, the first PDU includes one protocol header except the first protocol header and the second protocol header.

In a sub-embodiment of this embodiment, the first PDU includes at least one protocol header except the first protocol header and the second protocol header.

In a sub-embodiment of this embodiment, the first PDU includes a plurality of protocol headers except the first protocol header and the second protocol header.

### Embodiment 11

Embodiment 11 describes a schematic diagram of a first PDU and a second PDU according to an embodiment of this application, as shown in FIG. 11. In FIG. 11, a box 1101 is a second protocol header, a box 1102 is a first unit, a box 1103 is a first protocol header, a box 1104 is a second unit, and a box 1105 is a first PDU.

In Embodiment 11, the second PDU includes the second protocol header and the first unit, and the first PDU includes the second PDU and the first protocol header. The first protocol header and the second protocol header are two different protocol headers.

In an embodiment, formats of the first protocol header and the second protocol header are different.

In an embodiment, the second unit includes a PDU.

In an embodiment, the second unit includes an SDU.

In an embodiment, the second unit includes a MAC CE.

In an embodiment, the second unit is a PDCP SDU.

In an embodiment, the second unit is an RLC SDU.

In an embodiment, the second unit is a MAC subPDU.

In an embodiment, the second unit is a MAC SDU.

In an embodiment, the second unit is a MAC CE.

In an embodiment, the second unit includes a part of bits of the second PDU.

In an embodiment, the second unit includes each bit of the second PDU.

In an embodiment, the second unit does not include any bit outside the second PDU.

In an embodiment, the second unit includes at least one bit outside the second PDU.

In an embodiment, the second unit includes at least one data header outside the second PDU.

In an embodiment, a protocol layer to which the first PDU belongs is the same as a protocol layer to which the second PDU belongs. The first PDU and the second PDU belong to different radio bearers.

In an embodiment, a protocol layer to which the first PDU belongs is the same as a protocol layer to which the second PDU belongs. The first PDU and the second PDU belong to a same radio bearer.

### Embodiment 12

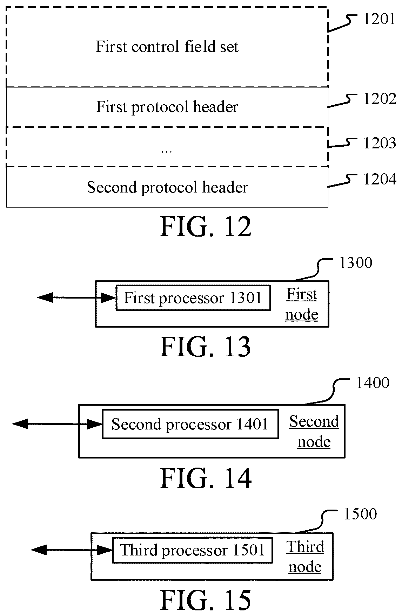

Embodiment 12 describes a schematic diagram of a protocol header to which a first protocol header and a second protocol header belong according to an embodiment of this application, as shown in FIG. 12. In FIG. 12, a box 1201 is a first control field set, a box 1202 is a first protocol header, a box 1203 is another protocol header in a first protocol header set, and a box 1204 is a second protocol header.

In Embodiment 12, the first protocol header and the second protocol header are two fields in a same protocol header.

In an embodiment, the same protocol header to which the first protocol header and the second protocol header belong is used for an SL-SCH.

In an embodiment, the same protocol header to which the first protocol header and the second protocol header belong is used for a DL-SCH.

In an embodiment, the same protocol header to which the first protocol header and the second protocol header belong is used for a multicast/broadcast service (MBS).

In an embodiment, the same protocol header to which the first protocol header and the second protocol header belong includes the first control field set and the first protocol header set. In an embodiment, the same protocol header to which the first protocol header and the second protocol header belong is an SL-SCH MAC subheader.

In an embodiment, the first control field set includes a logical channel ID (LCID) field.

In an embodiment, the first control field set includes an extended logical channel ID (eLCID) field.

In an embodiment, the first control field set includes a length (L) field.

In an embodiment, the first control field set includes a V field and an R field.

In an embodiment, the first control field set includes an SRC field.

In an embodiment, the first control field set includes at least one R field.

In an embodiment, the first control field set includes an SRC field.

In a sub-embodiment of this embodiment, the SRC field indicates a sending end of a first unit.

In a sub-embodiment of this embodiment, the SRC field occupies one octet.

In a sub-embodiment of this embodiment, the SRC field occupies two octets.

In a sub-embodiment of this embodiment, for a meaning of the SRC field, refer to section 6.2.4 of TS 38.321 in 3GPP.

In an embodiment, the first control field set includes a V field.

In an embodiment, V stands for MAC PDU format version number.

In an embodiment, the V field is set to 0.

In an embodiment, the V field is set to be non-0.

In an embodiment, the V field is set to 1.

In an embodiment, the first control field set includes an R field, and the R field includes at least one bit.

In an embodiment, at least one bit in the first control field set is used to determine a quantity of protocol headers in the first protocol header set.

In an embodiment, at least one bit in the first control field set is used to determine a quantity of DST fields.

In an embodiment, the R field is used to determine a quantity of DST fields.

In an embodiment, a bit in the R field is used to determine a quantity of DST fields.

In an embodiment, at least one bit in the R field is used to determine a quantity of DST fields.

In a sub-embodiment of this embodiment, the first protocol header and the second protocol header are both DST fields.

In a sub-embodiment of this embodiment, the first protocol header and the second protocol header are both fields in an SL-SCH MAC subheader.

In a sub-embodiment of this embodiment, any protocol header in the first protocol header set is a DST field.

In an embodiment, the box 1201 in FIG. 12 is optional.

In an embodiment, the box 1201 in FIG. 12 does not exist.

In an embodiment, the box 1201 in FIG. 12 exists.

In an embodiment, the box 1204 in FIG. 12 is optional.

In an embodiment, the box 1204 in FIG. 12 includes at least one octet.

In an embodiment, the box 1204 in FIG. 12 includes at least one protocol header.

In an embodiment, the box 1204 in FIG. 12 does not exist.

In a sub-embodiment of this embodiment, the protocol header does not include any protocol header except the first protocol header and the second protocol header.

In an embodiment, the box 1204 in FIG. 12 exists.

In a sub-embodiment of this embodiment, the first protocol header set includes only the first protocol header and the second protocol header.

In a sub-embodiment of this embodiment, the first protocol header set includes one protocol header except the first protocol header and the second protocol header.

In a sub-embodiment of this embodiment, the first protocol header set includes at least one protocol header except the first protocol header and the second protocol header.

In a sub-embodiment of this embodiment, the first protocol header set includes a plurality of protocol headers except the first protocol header and the second protocol header.

As an attached embodiment of the foregoing sub-embodiment, the plurality of protocol headers is a subset of the first protocol header set.

As an attached embodiment of the foregoing sub-embodiment, any one of the plurality of protocol headers is a DST field.

In an embodiment, a first PDU includes the same protocol header and a MAC subPDU, and the MAC subPDU includes a first unit.

In an embodiment, each protocol header in the first protocol header set is a field in the same protocol header.

In an embodiment, each protocol header in the first protocol header set is a DST field.

In an embodiment, the first protocol header is a DST field.

In an embodiment, the second protocol header is a DST field.

In an embodiment, each DST field indicates one receiving end.

In an embodiment, each DST field occupies one octet.

In an embodiment, each DST field occupies two octets.

In an embodiment, for a meaning of the DST field, refer to section 6.2.4 of TS 38.321 in 3GPP.

### Embodiment 13

Embodiment 13 describes a block diagram of a structure of a processing apparatus used for a first node according to an embodiment of this application, as shown in FIG. 13. In FIG. 13, the processing apparatus 1300 in the first node includes a first processor 1301.

The first processor 1301 performs an operation on a first PDU, where the first PDU includes a first protocol header set and a first unit.

In Embodiment 13, the operation is a receiving operation, or the operation is a sending operation. The first protocol header set includes at least a first protocol header and a second protocol header. Any protocol header in the first protocol header set belongs to a first protocol layer, the first protocol layer is not higher than an SDAP sublayer, and the first protocol layer is not lower than a MAC sublayer. Each protocol header in the first protocol header set indicates the first unit.

In an embodiment, the first protocol header and the second protocol header are two different protocol headers.

In an embodiment, before the operation is performed on the first PDU, the first processor receives a second PDU, where the second PDU includes the second protocol header and the first unit; the first PDU includes the second PDU and the first protocol header; the first PDU terminates between the first node and a second node, and the second PDU terminates between the first node and a third node; and the operation is the sending operation.

In an embodiment, the first protocol header and the second protocol header are two fields in a same protocol header.

In an embodiment, the first protocol header indicates the first node, and the second protocol header indicates the third node.

In an embodiment, each of the first protocol header and the second protocol header includes a target field, the target field in the first protocol header and the target field in the second protocol header are set to a same value, and the operation is the receiving operation.

In an embodiment, the first PDU includes a first field, and the first field indicates a quantity of protocol headers in the first protocol header set.

In an embodiment, the first processor 1301 includes at least a first transmitter.

In an embodiment, the first processor 1301 includes at least a first receiver.

In an embodiment, the first processor 1301 includes at least a first transmitter and a first receiver.

In an embodiment, the first receiver includes the antenna 452, the receiver 454, the multi-antenna receive processor 458, the receive processor 456, the controller/processor 459, the memory 460, and the data source 467 shown in FIG. 4 of this application.

In an embodiment, the first receiver includes the antenna 452, the receiver 454, the multi-antenna receive processor 458, and the receive processor 456 shown in FIG. 4 of this application.

In an embodiment, the first receiver includes the antenna 452, the receiver 454, and the receive processor 456 shown in FIG. 4 of this application.

In an embodiment, the first transmitter includes the antenna 452, the transmitter 454, the multi-antenna transmit processor 457, the transmit processor 468, the controller/processor 459, the memory 460, and the data source 467 shown in FIG. 4 of this application.

In an embodiment, the first transmitter includes the antenna 452, the transmitter 454, the multi-antenna transmit processor 457, and the transmit processor 468 shown in FIG. 4 of this application.

In an embodiment, the first transmitter includes the antenna 452, the transmitter 454, and the transmit processor 468 shown in FIG. 4 of this application.

### Embodiment 14

Embodiment 14 describes a block diagram of a structure of a processing apparatus used for a second node according to an embodiment of this application, as shown in FIG. 14. In FIG. 14, the processing apparatus 1400 in the second node includes a second processor 1401.

The second processor 1401 performs an operation on a first PDU, where the first PDU includes a first protocol header set and a first unit.

In Embodiment 14, the operation is a sending operation, or the operation is a receiving operation. The first protocol header set includes at least a first protocol header and a second protocol header. Any protocol header in the first protocol header set is a protocol header of a first protocol layer, the first protocol layer is not higher than an SDAP sublayer, and the first protocol layer is not lower than a MAC sublayer. Each protocol header in the first protocol header set indicates the first unit.

In an embodiment, the first protocol header and the second protocol header are two different protocol headers.

In an embodiment, before the first PDU is sent by a first node, a second PDU is received by the first node, where the second PDU includes the second protocol header and the first unit; the first PDU includes the second PDU and the first protocol header; the first PDU terminates between the first node and the second node, and the second PDU terminates between the first node and a third node; and the operation is the receiving operation.

In an embodiment, the first protocol header and the second protocol header are two fields in a same protocol header.

In an embodiment, the first protocol header indicates the first node, and the second protocol header indicates the third node.

In an embodiment, each of the first protocol header and the second protocol header includes a target field, the target field in the first protocol header and the target field in the second protocol header are set to a same value, and the operation is the receiving operation.

In an embodiment, the first PDU includes a first field, and the first field indicates a quantity of protocol headers in the first protocol header set.

In an embodiment, the second processor 1401 includes at least a second transmitter.

In an embodiment, the second processor 1401 includes at least a second receiver.

In an embodiment, the second processor 1401 includes at least a second transmitter and a second receiver.

In an embodiment, the second transmitter includes the antenna 420, the transmitter 418, the multi-antenna transmit processor 471, the transmit processor 416, the controller/processor 475, and the memory 476 in FIG. 4 of this application.

In an embodiment, the second transmitter includes the antenna 420, the transmitter 418, the multi-antenna transmit processor 471, and the transmit processor 416 shown in FIG. 4 of this application.

In an embodiment, the second transmitter includes the antenna 420, the transmitter 418, and the transmit processor 416 shown in FIG. 4 of this application.

In an embodiment, the second receiver includes the antenna 420, the receiver 418, the multi-antenna receive processor 472, the receive processor 470, the controller/processor 475, and the memory 476 shown in FIG. 4 of this application.

In an embodiment, the second receiver includes the antenna 420, the receiver 418, the multi-antenna receive processor 472, and the receive processor 470 shown in FIG. 4 of this application.

In an embodiment, the second receiver includes the antenna 420, the receiver 418, and the receive processor 470 shown in FIG. 4 of this application.

### Embodiment 15

Embodiment 15 describes a block diagram of a structure of a processing apparatus used for a third node according to an embodiment of this application, as shown in FIG. 15. In FIG. 15, the processing apparatus 1500 in the third node includes a third processor 1501.

The third processor 1501 sends a second PDU, where the second PDU includes a second protocol header and a first unit.

In Embodiment 15, after the second PDU is sent, a first PDU is sent by a first node, and the first PDU includes a first protocol header set and the first unit. The first protocol header set includes at least a first protocol header and the second protocol header, and the first protocol header and the second protocol header are two different protocol headers. Any protocol header in the first protocol header set is a protocol header of a first protocol layer, the first protocol layer is not higher than an SDAP sublayer, and the first protocol layer is not lower than a MAC sublayer. Each protocol header in the first protocol header set indicates the first unit. The first PDU includes the second PDU and the first protocol header. The first PDU terminates between the first node and a second node, and the second PDU terminates between the first node and the third node. The first PDU is received by the second node.

In an embodiment, the first protocol header indicates the first node, and the second protocol header indicates the third node.

In an embodiment, each of the first protocol header and the second protocol header includes a target field, and the target field in the first protocol header and the target field in the second protocol header are set to a same value.

In an embodiment, the first PDU includes a first field, and the first field indicates a quantity of protocol headers in the first protocol header set.

In an embodiment, the third processor 1501 includes at least a third transmitter.

In an embodiment, the third processor 1501 includes at least a third receiver.

In an embodiment, the third processor 1501 includes at least a third transmitter and a third receiver.

In an embodiment, the third transmitter includes the antenna 420, the transmitter 418, the multi-antenna transmit processor 471, the transmit processor 416, the controller/processor 475, and the memory 476 in FIG. 4 of this application.

In an embodiment, the third transmitter includes the antenna 420, the transmitter 418, the multi-antenna transmit processor 471, and the transmit processor 416 shown in FIG. 4 of this application.

In an embodiment, the third transmitter includes the antenna 420, the transmitter 418, and the transmit processor 416 shown in FIG. 4 of this application.

In an embodiment, the third receiver includes the antenna 420, the receiver 418, the multi-antenna receive processor 472, the receive processor 470, the controller/processor 475, and the memory 476 shown in FIG. 4 of this application.

In an embodiment, the third receiver includes the antenna 420, the receiver 418, the multi-antenna receive processor 472, and the receive processor 470 shown in FIG. 4 of this application.

In an embodiment, the third receiver includes the antenna 420, the receiver 418, and the receive processor 470 shown in FIG. 4 of this application.

A person of ordinary skill in the art may understand that, all or some steps in the foregoing methods may be completed by instructing relevant hardware by using a program. The program may be stored in a computer-readable storage medium, for example, a read-only memory, a hard disk drive, or an optical disk. Optionally, all or some of the steps of the foregoing embodiments may alternatively be implemented by using one or more integrated circuits. Accordingly, each module unit in the foregoing embodiments may be implemented in a form of hardware or in a form of software functional modules, and this application is not limited to any specific form of combination of software and hardware. The user equipment, the terminal, and the UE in this application include, but are not limited to, wireless communication devices such as an unmanned aerial vehicle, a communication module on the unmanned aerial vehicle, a remote control aircraft, an aircraft, a small aircraft, a mobile phone, a tablet computer, a notebook computer, a vehicle-mounted communication device, a wireless sensor, an internet card, an internet of things terminal, an RFID terminal, an NB-IOT terminal, a machine type communication (MTC) terminal, an enhanced MTC (eMTC) terminal, a data card, an internet card, a vehicle-mounted communication device, a low-cost mobile phone, and a low-cost tablet computer. The base station or the system device in this application includes, but is not limited to a wireless communication device such as a macrocellular base station, a microcellular base station, a home base station, a relay base station, an NR NodeB (gNB), and a transmission and reception point (TRP).

The foregoing descriptions are merely preferred embodiments of this application and are not intended to limit the protection scope of this application. Any modification, equivalent replacement, improvement, or the like made without departing from the spirit and principle of this application shall fall within the protection scope of this application.

## Claims

1. A first node used for wireless communication, comprising:
a first processor, performing an operation on a first PDU, wherein the first PDU comprises a first protocol header set and a first unit, wherein
the operation is a receiving operation, or the operation is a sending operation; the first protocol header set comprises at least a first protocol header and a second protocol header; any protocol header in the first protocol header set belongs to a first protocol layer, the first protocol layer is not higher than an SDAP sublayer, and the first protocol layer is not lower than a MAC sublayer; and each protocol header in the first protocol header set indicates the first unit.

2. The first node according to claim 1, wherein the first protocol header and the second protocol header are two different protocol headers.

3. The first node according to claim 1 or 2, comprising:
the first processor, receiving a second PDU before the operation is performed on the first PDU, wherein the second PDU comprises the second protocol header and the first unit, wherein
the first PDU comprises the second PDU and the first protocol header, the first PDU terminates between the first node and a second node, the second PDU terminates between the first node and a third node, and the operation is the sending operation.

4. The first node according to claim 1, wherein the first protocol header and the second protocol header are two fields in a same protocol header.

5. The first node according to any one of claims 1 to 4, wherein the first protocol header indicates the first node, and the second protocol header indicates the third node.

6. The first node according to any one of claims 1 to 5, wherein each of the first protocol header and the second protocol header comprises a target field, the target field in the first protocol header and the target field in the second protocol header are set to a same value, and the operation is the receiving operation.

7. The first node according to any one of claims 1 to 6, wherein the first PDU comprises a first field, and the first field indicates a quantity of protocol headers in the first protocol header set.

8. A second node used for wireless communication, comprising:
a second processor, performing an operation on a first PDU, wherein the first PDU comprises a first protocol header set and a first unit, wherein
the operation is a sending operation, or the operation is a receiving operation; the first protocol header set comprises at least a first protocol header and a second protocol header; any protocol header in the first protocol header set is a protocol header of a first protocol layer, the first protocol layer is not higher than an SDAP sublayer, and the first protocol layer is not lower than a MAC sublayer; and each protocol header in the first protocol header set indicates the first unit.

9. A method for a first node used for wireless communication, comprising:
performing an operation on a first PDU, wherein the first PDU comprises a first protocol header set and a first unit, wherein
the operation is a receiving operation, or the operation is a sending operation; the first protocol header set comprises at least a first protocol header and a second protocol header; any protocol header in the first protocol header set is a protocol header of a first protocol layer, the first protocol layer is not higher than an SDAP sublayer, and the first protocol layer is not lower than a MAC sublayer; and each protocol header in the first protocol header set indicates the first unit.

10. A method for a second node used for wireless communication, comprising:
performing an operation on a first PDU, wherein the first PDU comprises a first protocol header set and a first unit, wherein
the operation is a sending operation, or the operation is a receiving operation; the first protocol header set comprises at least a first protocol header and a second protocol header; any protocol header in the first protocol header set is a protocol header of a first protocol layer, the first protocol layer is not higher than an SDAP sublayer, and the first protocol layer is not lower than a MAC sublayer; and each protocol header in the first protocol header set indicates the first unit.
